# EUROPEAN PATENT APPLICATION

(11) **EP 2 214 419 A1**
(43) Date of publication of application: **04.08.2010**
(21) Application number: 08855232.8
(22) Date of filing: 26.11.2008
(51) Int. Cl.: H04R 3/00, H04B 1/38, H04M 1/60, H04R 1/00

(54) **VOICE INPUT/OUTPUT AUTOMATIC SWITCHING CIRCUIT USED IN HAND-HELD MICROPHONE WITH SPEAKER OF COMMUNICATION DEVICE SUCH AS TRANSCEIVER**

(30) Priority: 30.11.2007 JP 2007310089
(71) Applicant: Temco Japan Co., Ltd., Tokyo 168-0062 (JP)
(72) Inventor: FUJINO, Shouji, Tokyo 168-0062 (JP)
(74) Representative: Bentz, Jean-Paul
(86) International application number: PCT/JP2008/003477
(87) International publication number: WO 2009/069289

(57) **Abstract**

An object of the invention is to provide a voice input/output automatic switching circuit used in a hand-held microphone with speaker of a communication device such as a transceiver. In the voice input/output automatic switching circuit, a circuit for detecting a handsfree speaker/microphone can be simply configured without requiring a particular detection terminal and moreover, a sufficient countermeasure can be taken against a malfunction caused upon its switching. The voice input/output automatic switching circuit includes a voice input automatic switching circuit constituted of: a current detecting resistor 5 having a low resistance value, arranged on an output line of a microphone 1; a comparator 4 which detects a voltage drop across the current detecting resistor 5 and switches the output; an analog switch 3 which automatically switches, according to the state of an output signal of the comparator 4, an electrical signal circuit on the side of a microphone 2 of the hand-held microphone B with speaker to the side of the microphone 1 of the handsfree speaker/microphone C; and a capacitor 6 having a sufficiently low impedance with respect to a voice component, connected in parallel to the current detecting resistor 5.

## Description

### Technical Field

The present invention relates to a voice input/output automatic switching circuit used in a hand-held microphone with speaker of a communication device such as a transceiver, and more particularly to a voice input/output automatic switching circuit for automatically switching a voice input/output circuit from the side of a microphone and speaker in a hand-held microphone with speaker of a communication device such as a transceiver to the side of a handsfree speaker/microphone composed of a microphone and speaker when the handsfree speaker/microphone is additionally connected to the hand-held microphone with speaker.

### Background Art

When a transceiver or the like provided with a hand-held microphone with speaker is used in a fire site, disaster site or the like filled with high noises, a handsfree speaker/microphone composed of a bone conduction microphone, a bone conduction speaker and the like, hardly influenced by the noises is usually additionally connected and used to the hand-held microphone with speaker.

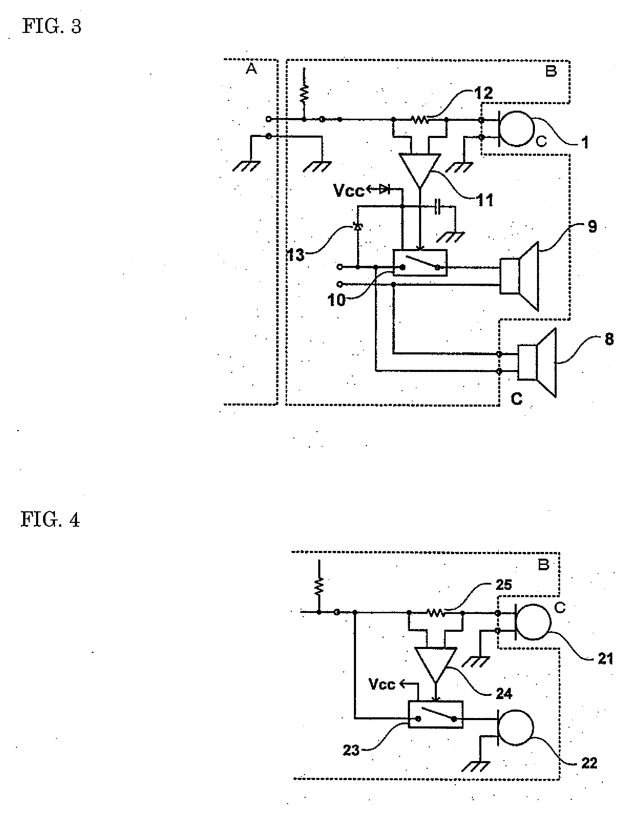

In this case, an analog switch 23 is, as illustrated in Figure 4, arranged in a circuit connecting to a microphone 22 within a hand-held microphone B with speaker, and automatic switching is performed through the analog switch 23 between a bone conduction microphone 21 of a handsfree speaker/microphone C and the microphone 22 of the hand-held microphone with speaker. For this purpose, a comparator 24 is connected to the analog switch 23.

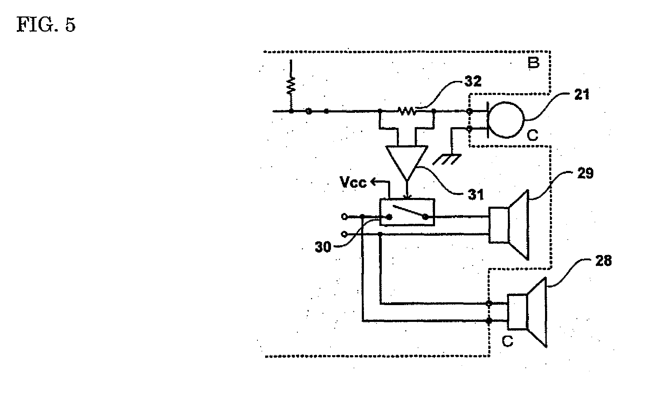

In another configuration example illustrated in Figure 5, an analog switch 30 is arranged in a circuit connecting to a speaker 29 within a hand-held microphone B with speaker, and automatic switching is performed through the analog switch 30 between a bone conduction speaker 28 of a handsfree speaker/microphone C and the speaker 29 of the hand-held microphone with speaker. For this purpose, a comparator 31 is connected to the analog switch 30.

In these configuration examples, in order to allow automatic circuit switching, a current detecting resistor 25 (32) such as a rectangular low-resistance chip resistor is arranged on an output line of the bone conduction microphone 21; and when the bone conduction microphone 21 is connected and the comparator 24 (31) detects a voltage drop, the analog switch 23 (30) is controlled to perform the switching.

In the above switching configuration, however, when the bone conduction speaker 28 emits large sound, the bone conduction microphone 27 may produce a large output, so that the detection voltage is cancelled, thus causing a malfunction. Further, the analog switch 30 and the comparator 31 are powered by a power source of the communication device, so when a large sound is emitted, an inductive component from the speaker may cause an overshoot equal to or greater than the power source voltage, so that the analog switch 30 operates erroneously.

There is also another switching method in which the switching is performed by a mechanical switch, and the connector includes a detection terminal. However, methods of this type have disadvantages that automatic switching cannot be performed and that a multi-pin connector must be used to provide a detection terminal.
Patent Document 1: Japanese Utility Model Publication No. 63-6955

### Disclosure of the Invention

### Problems to be Solved by the Invention

To address the problems of the related art voice input/output automatically switching methods used for a hand-held microphone with speaker, the present invention has been devised and an object thereof is to provided a voice input/output automatic switching circuit used in a hand-held microphone with speaker of a communication device such as a transceiver; in the voice input/output automatic switching circuit, a circuit for detecting connection of a handsfree speaker/microphone to the hand-held microphone with speaker can be simply configured without requiring a particular detection terminal and moreover, a sufficient countermeasure can be taken against a malfunction caused upon its switching.

### Means for Solving the Problems

According to the invention described in claim 1 for solving the above problems, there is provided a voice input/output automatic switching circuit used in a hand-held microphone with speaker of a communication device such as a transceiver to which a handsfree speaker/microphone is occasionally connected and used, for performing automatic circuit switching to the handsfree speaker/microphone, the voice input/output automatic switching circuit comprising a voice input automatic switching circuit including: a current detecting resistor having a low resistance value, arranged on an output line of a microphone of the handsfree speaker/microphone connected to the hand-held microphone with speaker; a comparator which detects a voltage drop across the current detecting resistor and switches the output; an analog switch which automatically switches, according to the state of an output signal of the comparator, an electrical signal circuit on the side of a microphone of the hand-held microphone with speaker to the side of the microphone of the handsfree speaker/microphone; and a capacitor having a sufficiently low impedance with respect to a voice component, connected in parallel to the current detecting resistor.

According to the invention described in claim 2 for solving the above problems, there is provided a voice input/output automatic switching circuit used in a microphone with speaker of a communication device such as a transceiver to which a handsfree speaker/microphone is occasionally connected and used, for performing automatic circuit switching to the handsfree speaker/microphone, the voice input/output automatic switching circuit comprising a voice output automatic switching circuit including: a current detecting resistor having a low resistance value, arranged on an output line of a microphone of the handsfree speaker/microphone connected to the hand-held microphone with speaker; a comparator which detects a voltage drop across the current detecting resistor and switches the output; an analog switch which automatically switches, according to the state of an output signal of the comparator, an electrical signal circuit on the side of the hand-held microphone with speaker to the side of a speaker of the handsfree speaker/microphone; and a Schottky barrier diode having a low forward voltage, connected between an input terminal of the analog switch and a power source terminal.

Typically, the microphone in the handsfree speaker/microphone is a bone conduction microphone, and the speaker in the handsfree speaker/microphone is a bone conduction speaker.

### Advantages of the Invention

According to the present invention, as described above, the capacitor is connected in parallel to the current detecting resistor, and a Schottky barrier diode is connected between the analog switch input and the power source so that clipping is performed by the power source voltage; thus the circuit for detecting connection of a handsfree speaker/microphone to a hand-held microphone with speaker can be formed using a simple configuration requiring no particular detection terminal. Further, the capacitor having a sufficiently low impedance with respect to a voice component is connected in parallel to the current detecting resistor, so that a malfunction is prevented; thus after detection of connection of the handsfree speaker/microphone to the hand-held microphone with speaker, automatic switching to the hand-held microphone with speaker can be performed without a malfunction.

### Best Mode for Carrying Out the Invention

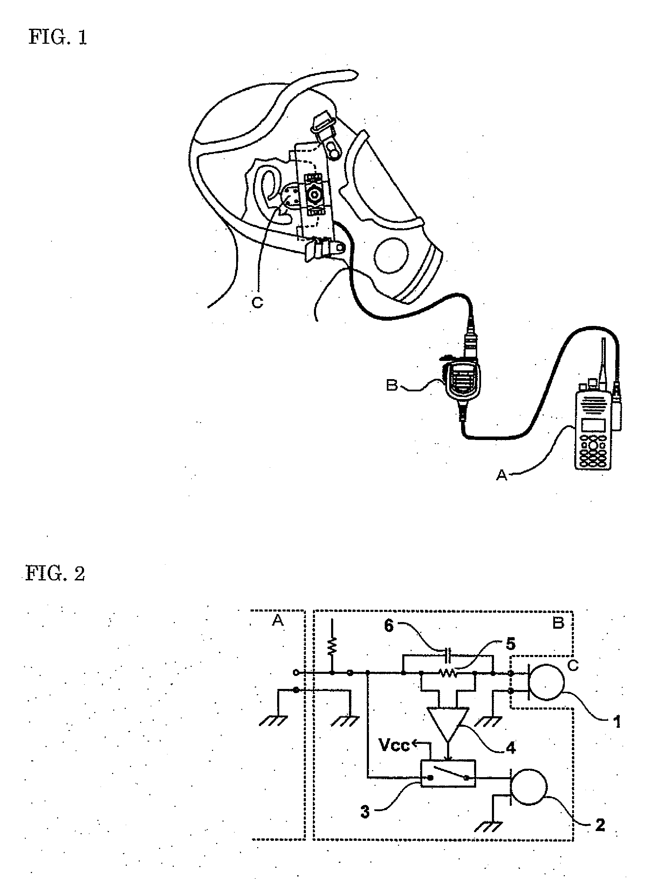

A best mode for carrying out the present invention will be described with reference to the accompanying drawings. According to the present invention, there is provided, for example, a circuit incorporated in a hand-held microphone B with speaker of a communication device (hereinafter, simply referred to as a transceiver A) such as a transceiver A to which a handsfree speaker/microphone C composed of a bone conduction microphone and a bone conduction speaker is occasionally connected and used; with this circuit, stable voice input/output switching can be automatically performed for the operation of the handsfree speaker/microphone C (refer to Figure 1).

Figure 2 illustrates a voice input automatic switching circuit of the voice input/output automatic switching circuit according to the present invention. Referring to Figure 1, reference numeral 1 denotes a bone conduction microphone of the handsfree speaker/microphone connected to the hand-held microphone B with speaker; and reference numeral 2 denotes a microphone constituting a voice input section in the hand-held microphone B with speaker connected via a connector to the transceiver A.

In the hand-held microphone B with speaker, a circuit switching analog switch 3 is arranged in a circuit connecting to the microphone 2; and a current detecting resistor 5 such as a rectangular low-resistance chip resistor and a comparator 4 are arranged on an output line of the bone conduction microphone 1. The analog switch 3 and comparator 4 may be integrated into a package or may be separately arranged.

According to the present invention, a capacitor 6 is further connected in parallel to the current detecting resistor 5. The capacitor 6 has a sufficiently low impedance with respect to a voice component; thus only a DC component of the voltage drop is detected, preventing a malfunction caused by the output of the bone conduction microphone 1.

The analog switch 3 performs, according to the state of an input signal from the comparator 4, ON/OFF switching of the circuit on the side of the microphone 2. The comparator 4 detects a voltage across the current detecting resistor 5 disposed on the output line of the bone conduction microphone 1; the comparator 4 detects a voltage drop of a phantom power source caused by connection of the bone conduction microphone 1 and produces an output signal to operate the analog switch 3. As the comparator 4, a standard operational amplifier without negative feedback may be used.

An embodiment of a voice output automatic switching circuit of the voice input/output automatic switching circuit according to the present invention illustrated in Figure 3 will be described. According to the present embodiment, the voice output automatic switching circuit between a bone conduction speaker 8 of the handsfree speaker/microphone and a speaker 9 of the hand-held microphone B with speaker includes an analog switch 10, comparator 11, current detecting resistor 12 and Schottky barrier diode 13. The analog switch 10, comparator 11 and current detecting resistor 12 are similar to those of the switching circuit for the voice input section illustrated in Figure 2 and hence an explanation thereof is omitted.

The absolute maximum rating of input voltage range of the analog switch 10 is typically -0.3 V to Vcc + 0.3 V. Consequently, a voltage in a range of -0.3 V to Vcc + 0.3 V must be inputted to the analog switch 10. However, a voltage higher than the power source voltage may be applied to the input terminal; in this case, an external circuit must be used to deal with the high voltage. It is noted that there is also an analog switch 10 having an absolute maximum rating of -0.4 V to Vcc + 0.4 V or -0.5 V to Vcc + 0.5 V.

Thus, in the automatic switching circuit for the voice output section of the voice input/output automatic switching circuit according to the present invention, the Schottky barrier diode 13 having a low forward voltage is connected between the input terminal of the analog switch 10 and the power source terminal, and clipping is performed by the power source voltage so that an input voltage equal to or greater than the operating limit voltage of the analog switch 10 is prevented from being applied. With this configuration, it is possible to prevent a malfunction caused by overshooting. In a case where an overshoot occurs, the audio output is significantly distorted and thus the distortion caused by the clipping operation can also be neglected.

In the above description, the voice input section and the voice output section have been separately described. However, as the handsfree speaker/microphone, one provided with both the microphone and speaker is typically used; thus the above described voice input section and voice output section are incorporated into the hand-held microphone B with speaker. In the present embodiment, a case has been described where a bone conduction microphone and bone conduction speaker are used as the microphone and speaker of the handsfree speaker/microphone, but the invention is not limited thereto.

The hand-held microphone B with speaker provided with the above described circuit can be used by an ordinary usage method. However, for example, when communication is performed during the operation on a fire site while using a gas mask, the hand-held microphone B with speaker is attached to a belt, chest pocket or the like, and the handsfree speaker/microphone C attached to the gas mask is connected and used to the hand-held microphone B with speaker. In this case, it is detected by the above described circuit operation that the handsfree speaker/microphone C has been connected to the hand-held microphone B with speaker, and also the circuit switching is automatically performed so that the handsfree speaker/microphone C can operate. Accordingly, transmission and reception can be performed through the handsfree speaker/microphone C without being interrupted by noises.

The present invention has been described in some detail in connection with a preferred embodiment, but it will be apparent that widely different embodiments may be constructed without departing from the spirit and scope of the invention. Accordingly, the present invention is defined by the scope of the appended claims, and is not limited to only the specific embodiment of the invention.

### Brief Description of the Drawings

Figure 1 is a view illustrating an exemplary communication method using a hand-held microphone with speaker provided with a voice input/output automatic switching circuit according to the present invention;
Figure 2 is a circuit diagram illustrating a configuration of a voice input section switching unit according to the present invention;
Figure 3 is a circuit diagram illustrating a configuration of a voice output section switching unit according to the present invention;
Figure 4 is a circuit diagram illustrating a configuration of a voice input section switching unit according to related art; and
Figure 5 is a circuit diagram illustrating a configuration of a voice output section switching unit according to related art.

## Claims

1. A voice input/output automatic switching circuit used in a hand-held microphone with speaker of a communication device such as a transceiver to which a handsfree speaker/microphone is occasionally connected and used, for performing automatic circuit switching to the handsfree speaker/microphone, the voice input/output automatic switching circuit comprising a voice input automatic switching circuit including: a current detecting resistor having a low resistance value, arranged on an output line of a microphone of the handsfree speaker/microphone connected to the hand-held microphone with speaker; a comparator which detects a voltage drop across the current detecting resistor and switches the output; an analog switch which automatically switches, according to the state of an output signal of the comparator, an electrical signal circuit on the side of a microphone of the hand-held microphone with speaker to the side of the microphone of the handsfree speaker/microphone; and a capacitor having a sufficiently low impedance with respect to a voice component, connected in parallel to the current detecting resistor.

2. A voice input/output automatic switching circuit used in a microphone with speaker of a communication device such as a transceiver to which a handsfree speaker/microphone is occasionally connected and used, for performing automatic circuit switching to the handsfree speaker/microphone, the voice input/output automatic switching circuit comprising a voice output automatic switching circuit including: a current detecting resistor having a low resistance value, arranged on an output line of a microphone of the handsfree speaker/microphone connected to the hand-held microphone with speaker; a comparator which detects a voltage drop across the current detecting resistor and switches the output; an analog switch which automatically switches, according to the state of an output signal of the comparator, an electrical signal circuit on the side of the hand-held microphone with speaker to the side of a speaker of the handsfree speaker/microphone; and a Schottky barrier diode having a low forward voltage, connected between an input terminal of the analog switch and a power source terminal.

3. The voice input/output automatic switching circuit according to claim 1 or 2, wherein the microphone in the handsfree speaker/microphone is a bone conduction microphone.

4. The voice input/output automatic switching circuit according to claim 2, wherein the speaker in the handsfree speaker/microphone is a bone conduction speaker.
